# EUROPÄISCHE PATENTANMELDUNG

(11) **EP 0 775 461 A1**
(43) Veröffentlichungstag der Anmeldung: **28.05.1997**
(21) Anmeldenummer: 96116306.0
(22) Anmeldetag: 11.10.1996
(51) Int. Cl.: A47J 45/07

(54) **Griffbefestigung an einem Kochgefäss**

(30) Priorität: 23.11.1995 DE 29518558 U
(71) Anmelder: HEINRICH BAUMGARTEN KG SPEZIALFABRIK FÜR BESCHLAGTEILE, 57290 Neunkirchen (DE)
(72) Erfinder: Fischbach, Wolfgang, 57567 Daaden (DE)
(74) Vertreter: Missling, Arne, Dipl.-Ing.

(57) **Zusammenfassung**

Bei einem Druck- oder Spritzguß hergestellten Kochgefäß kann ein Tragsteg für das erforderliche Griffstück mit angegossen werden. Kurze Tragstege führen dabei aber leicht zu einer wenig stabilen Befestigung. Ein zweigeteilter Tragsteg (3,22) aus einem angegossenen Bolzenhalter (22) und einem verlängernden Haltebolzen (3) schafft Abhilfe. Der Haltebolzen (3) ist als Drehteil ausgeführt und mittels einem Befestigungsgewinde mit dem Bolzenhalter (22) verbunden.

## Beschreibung

Die Erfindung betrifft eine Griffbefestigung an einem Kochgefäß oder dergleichen aus Druck- oder Spritzguß mit einem an einer Außenkontur des Kochgefäßes vorgesehenen, radial von der Außenkontur abstehendem Tragsteg, über den ein Griffstück in Richtung auf das Kochgefäß aufschieb- und arretierbar ist.

Derartige Griffbefestigungen sind seit langem bekannt, wobei in der Regel das Griffstück mit dem Tragsteg lösbar verrastet werden kann. Der Tragsteg kann an dem Kochgefäß angeschraubt sein, jedoch hat es sich bei Kochgefäßen aus Druck- oder Spritzguß bewährt, ihn gleich mit anzugießen, so daß die Herstellung eines speziellen Teiles und dessen Befestigung an dem Kochgefäß entfallen. Allerdings kann dabei der Tragsteg schon aus gießtechnischen Gründen nicht in beliebiger Länge ausgebildet werden, und man beschränkt sich deshalb für den Tragsteg auf einen kurzen, im Querschnitt zumeist quadratischen und jedenfalls nicht kreisrunden Anguß, so daß das Griffstück mit einer ähnlich profilierten längsaxialen Ausnehmung nach dem Aufschieben auf den Tragsteg auf diesem unverdrehbar ist. In dieser Lage wird erfolgt die Rastung, die ohne Schwierigkeiten so ausführbar ist, daS das Griffstück in längsaxialer Richtung spielfrei auf dem Tragsteg gehaltert ist.

Im übrigen aber führt die relativ kurze Ausführung der Steckverbindung aus dem Tragsteg und der komplementären Ausnehmung des Griffstückes nicht notwendig zu einer stabilen Befestigung des Griffstückes. Insbesondere läßt sich der Tragsteg nicht so paßgenau herstellen, daß er einerseits spielfrei in die Ausnehmung einführbar und andererseits das Griffstück danach völlig kipp- und drehsicher auf dem Tragsteg angeordnet ist. Vielmehr läßt es sich insbesondere wegen der geringen axialen Länge der formschlüssigen Verbindung oft nicht vermeiden, daß das Griffstück auf dem Tragstück eine gewisse Bewegungsfreiheit hat, die beim Gebrauch des Kochgefäßes störend empfunden werden kann und durch Verschleiß zunimmt.

Die Erfindung hat sich deshalb die Aufgabe gestellt, bei einer Griffbefestigung der eingangs näher bezeichneten Art dafür zu sorgen, daß das Griffstück so mit dem Tragsteg verbunden werden kann, daß ein stabiler Formschluß entsteht und die Verbindung auch nach langem Gebrauch des Kochgefäßes nicht locker wird, ohne daß dazu ein gießtechnisch ungünstig langer Tragsteg vorgesehen werden müßte.

Erfindungsgemäß wird die Aufgabe dadurch gelöst, daß der Tragsteg aus einem an der Außenkontur des Kochgefäßes angegossenen Bolzenhalter und einem in der Symmetrieachse des Bolzenhalters fluchtend angeordneten Haltebolzen besteht, der mit dem Bolzenhalter verschraubbar ist. Damit kann der Tragsteg wesentlich verlängert werden und weit in ein übergeschobenes Griffstück hineinreichen, so daß von vornherein die an dem Tragsteg herrschenden Hebelverhältnisse selbst bei einer Spielpassung zwischen dem Tragsteg und der zugehörigen Ausnehmung in dem Griffstück keine störende Bewegung zwischen beiden beim Gebrauch des Kochgefäßes erlauben; in der Regel kann deshalb die Paarung so bemessen werden, daß einerseits das Griffstück mit leichtem Preßsitz auf den Tragsteg geschoben werden und andererseits auch bei erheblicher Belastung der beteiligten Bauelemente keine Lockerung der Paarung befürchtet werden müßte.

Der Haltebolzen kann als Drehteil mit hohem Automatisierungsgrad billig hergestellt werden. Auch die erforderliche spanende Bearbeitung des an dem Kochgefäß angegossenen Bolzenhalters erfordert nur geringen Aufwand und kann gemeinsam mit dem Einschrauben des Haltebolzens auf einer entsprechenden Maschine vollautomatisch durchgeführt werden, so daß eine erhebliche Kostensteigerung nicht eintritt.

Das Griffstück ist besonders leicht auf den Tragsteg aufschiebbar und mit diesem durch einen stabilen Formschluß verbindbar, wenn der Haltebolzen einen vorzugsweise kreisförmigen Querschnitt besitzt, der den Querschnitt des Bolzenhalters nicht überschreitet, insbesondere in der Weise, daß der Querschnitt des Haltebolzens mit seinem Umfang demjenigen an dem Querschnitt des Bolzenhalters tangierend einbeschrieben ist. Während eine Verdrehsicherung beispielsweise durch einen quadratischen Querschnitt des Bolzenhalters bereits abgesichert ist, verhindert dessen Verlängerung durch den Haltebolzen zu einem verhältnismäßig tief in dem Griffstück versenkbaren Tragsteg sicher und dauerhaft eine Lockerung der Verbindung, wobei aber der Haltebolzen nach wie vor als reines Drehteil ausgebildet sein kann. Der Bolzenhalter muß dazu nicht notwendig durchweg einen quadratischen Querschnitt aufweisen, vielmehr genügt es, wenn er mindestens in Teilbereichen einen von einem Kreis abweichenden Querschnitt aufweist.

So ist es beispielsweise außerordentlich effektiv, wenn der Bolzenhalter zwei ebene, vorzugsweise parallele, querschnitts-symmetrisch angeordnete Mantelflächen aufweist, die paßgenau spanend endbearbeitet werden können und damit eine von vornherein spielfreie Verdrehsicherung gewährleisten, aber auch zu einem stabilen Formschluß in der Richtung beitragen, die durch das Haltemoment an dem Griffstück definiert ist.

Der Haltebolzen kann in einfacher Weise an dem Bolzenhalter befestigt werden, wenn an dem Tragsteg eine axiale Schraubverbindung aus einem Muttergewinde in dem Bolzenhalter und einem Bolzengewinde an dem Haltebolzen vorgesehen ist.

Eine besonders formstabile Verbindung zwischen dem Bolzenhalter und dem Haltebolzen kann dadurch hergestellt werden, daß an dem Haltebolzen stirnseitig ein Anschlagbund vorgesehen ist, der mit einer Stirnfläche an einer vorzugsweise spanend bearbeiteten Stirnfläche des Bolzenhalters anschlägt. Bei sorgfältiger Anfertigung der beiden aneinander schlagenden Stirnflächen des Haltebolzens und des Bolzenhalters ist eine außerordentlich starre, kippfreie reibschlüssige Verbindung möglich, vor allem, wenn der Haltebolzen mit dem Bolzenhalter durch ein Befestigungsgewinde verbunden ist.

In an sich bekannter Weise ist es vorteilhaft, wenn an dem Haltebolzen ein Rastelement zum Verrasten des Griffstückes an dem Tragsteg vorgesehen ist. Das Rastelement kann beispielsweise als Ringnut ausgebildet sein, in die eine federnde Raste des Griffstückes einfällt, wenn dieses um eine vorgesehene Strecke über den Tragsteg geschoben worden ist. Der Haltebolzen kann dementsprechend nach wie vor als reines Drehteil ausgeführt werden, und an dem Bolzenhalter müssen keine Maßnahmen zur Verrastung des Griffstückes vorgesehen sein.

Durch die Erfindung ist es möglich, mit einem sehr kurzen Anguß-Teil für den Tragsteg auszukommen, der für das Griffstück erforderlich ist, trotzdem aber mit geringem Mehraufwand eine sehr formstabile Verbindung zwischen diesen beiden Beuelementen zu gewährleisten, die in allen bei einer solchen Verbindung möglichen Freiheitsgraden wirksam ist.

Die Erfindung wird nachstehend anhand der Zeichnung an einem Ausführungsbeispiel näher erläutert. Es zeigen
Fig.1 eine erfindungsgemäße Griffbefestigung im mittigen, teilweisen Längsschnitt und
Fig.2 die gleiche Ansicht bei entferntem Griffstück,
sämtlich in schematisch vereinfachter Darstellung.

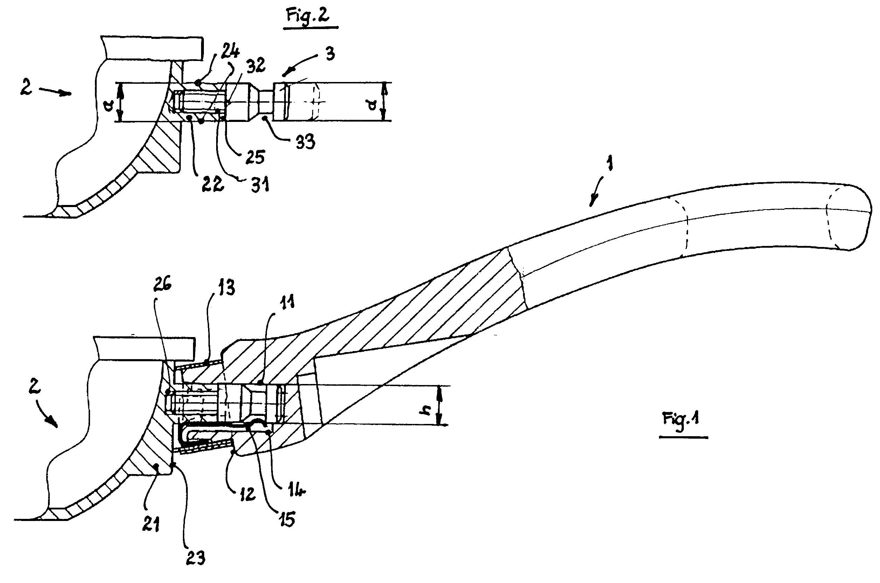

Eine Griffbefestigung nach der Erfindung verbindet entsprechend Fig.1 ein Griffstück 1 mit einem Kochgefäß 2. Das Griffstück 1 ist zu diesem Zweck mit einer Ausnehmung 11 versehen, die sich von einer dem Kochgefäß 2 zugewandten Stirnfläche 12 aus in das Griffstück 1 erstreckt. Die Stirnfläche 12 liegt nicht unmittelbar an dem Kochgefäß 2 an, sondern vielmehr über eine die Griffbefestigung abdeckende Distanzschelle 13. Die Ausnehmung 11 hat zumindest in einem an die Stirnfläche 12 anschließenden Bereich einen nicht kreisförmigen Querschnitt und enthält eine Längsnut 14, in der eine zweckentsprechend ausgeformte Blattfeder als Raste 15 zur Verrastung des Griffstückes 1 an dem Kochgefäß 2 dient.

An dem Kochgefäß 2 ist ein Halteansatz 21 angegossen, der als Anschlag für die Distanzschelle 13 dient, so daß ein formschöner Übergang auf das anschließende Griffstück 1 vorhanden ist. An dem Halteansatz 21 ist weiterhin (Fig.2) ein Bolzenhalter 22 ausgebildet, der ebenfalls angegossen ist. Der Bolzenhalter 22, selbst bolzenförmig ausgebildet, ragt senkrecht von einer Anschlagfläche 23 an dem Halteansatz 21 ab und weist einen von der Kreisform abweichenden Querschnitt auf. Zwei gegenüberliegende Mantelflächen 24 sind eben und flächenparallel ausgebildet. Durch spangebende Bearbeitung ist ihr gegenseitiger Abstand a der (zugehörigen) Ausnehmung 11 genau angepaßt, die in dem Bereich, der den Bolzenhalter 22 überfängt, einen komplementären Querschnitt mit einer Höhe h aufweist.

Auch eine von dem Kochgefäß 2 abgewandte Stirnfläche 25 des Bolzenhalters 22 ist spanend bearbeitet, ebenso wie ein Muttergewinde 26, das in eine axiale Bohrung des Bolzenhalters 22 geschnitten ist. Alle spanenden Bearbeitungen an dem Bolzenhalter 22 können ohne Schwierigkeiten mit einer einzigen Einspannung des Kochgefäßes 2 und in einem Zuge auf einer automatisch arbeitenden spangebenden Maschine angefertigt werden.

Ein Haltebolzen 3 ist als reines Drehteil ausgebildet und mit einem Bolzengewinde 31 in den Bolzenhalter 22 eingeschraubt, den gesamten Tragsteg 22,3 auf diese Weise ausbildend. Eine zu dem Bolzenhalter 22 weisende Stirnfläche 32 liegt dabei an der spanend geglätteten Stirnfläche 25 des Bolzenhalters 22 an und sorgt zusammen mit dem Befestigungsgewinde 26,31 für eine hochfesten Reibschluß-Verbindung beider Teile des Tragsteges 22,3. Der Haltebolzen 3 ist mit einem äußeren Durchmesser d so ausgeführt, daß sein Querschnitt denjenigen des Bolzenhalters 22 an keiner Stelle überschreitet in der Weise, daß die Umfänge beider Querschnitte einander tangieren. Es versteht sich, daß die Ausnehmung 11 des Griffstückes 1 hinsichtlich ihres Querschnittes bzw. ihrer Querschnitte und der zugehörigen Abmaße so gestaltet ist, daß dabei die verschiedenen Querschnitte des Tragsteges 22,3 aus dem Bolzenhalter 22 und dem Haltebolzen 3 entsprechend berücksichtigt sind.

Eine an dem Haltebolzen 3 angebrachte Ringnut bildet ein Rastelement 33, in das die an dem Griffstück 1 befindliche Raste 15 einfällt, wenn das Griffstück 1 auf den Tragesteg 22,3 aufgeschoben wird. Die Rastung 15,33 verriegelt demzufolge das Griffstück 1 an dem Kochgefäß 2.

Im Gegensatz zu der Zeichnung kann der Haltebolzen 3 noch wesentlich länger ausgeführt werden, je nachdem, wie tief die Ausnehmung 11 in dem Griffstück 1 ausfällt. Es versteht sich, daß jede Verlängerung des Tragsteges 22,3 eine Verbesserung der Griffbefestigung nach sich zieht.

### Aufstellung der Bezugszeichen

- 1: Griffstück
- 11: Ausnehmung
- 12: Stirnfläche
- 13: Distanzschelle
- 14: Längsnut
- 15: Raste
- 2: Kochgefäß
- 21: Halteansatz
- 22: Bolzenhalter
- 23: Anschlagfläche
- 24: Mantelfläche
- 25: Stirnfläche
- 26: Muttergewinde
- 3: Haltebolzen
- 31: Bolzengewinde
- 32: Stirnfläche
- 33: Rastelement
- 15,33: Rastung
- 22,3: Tragsteg
- 26,31: Befestigungsgewinde
- a: Abstand
- d: Durchmesser
- h: Höhe

## Patentansprüche

1. Griffbefestigung an einem Kochgefäß (2) oder dergleichen aus Druck- oder Spritzguß mit einem an einer Außenkontur des Kochgefäßes (2) vorgesehenen, radial von der Außenkontur abstehendem Tragsteg (22,3), über den ein Griffstück (1) in Richtung auf das Kochgefäß (2) aufschieb- und arretierbar ist,
dadurch gekennzeichnet, daß
der Tragsteg (22,3) aus einem an der Außenkontur des Kochgefäßes (2) angegossenen Bolzenhalter (22) und einem in der Symmetrieachse des Bolzenhalters (22) fluchtend angeordneten Haltebolzen (3) besteht, der mit dem Bolzenhalter (22) verschraubbar ist.

2. Griffbefestigung nach Anspruch 1, dadurch gekennzeichnet, daß der Haltebolzen (3) einen vorzugsweise kreisförmigen Querschnitt besitzt, der den Querschnitt des Bolzenhalters (22) nicht überschreitet.

3. Griffbefestigung nach Anspruch 2, dadurch gekennzeichnet, daß der Querschnitt des Haltebolzens (3) mit seinem Umfang demjenigen an dem Querschnitt des Bolzenhalters (22) tangierend einbeschrieben ist.

4. Griffbefestigung nach einem der Ansprüche 1 bis 3, dadurch gekennzeichnet, daß der Bolzenhalter (22) mindestens teilweise einen von einem Kreis abweichenden Querschnitt aufweist.

5. Griffbefestigung nach Anspruch 4, dadurch gekennzeichnet, daß der Bolzenhalter (22) zwei ebene, vorzugsweise parallele, querschnitts-symmetrisch angeordnete Mantelflächen (24) aufweist.

6. Griffbefestigung nach Anspruch 4, dadurch gekennzeichnet, daß der Bolzenhalter (22) einen quadratischen Querschnitt aufweist.

7. Griffbefestigung nach einem der Ansprüche 1 bis 6, dadurch gekennzeichnet, daß an dem Tragsteg (22,3) eine axiale Schraubverbindung aus einem Muttergewinde (26) in dem Bolzenhalter (22) und einem Bolzengewinde (31) an dem Haltebolzen (3) vorgesehen ist.

8. Griffbefestigung nach einem der Ansprüche 1 bis 7, dadurch gekennzeichnet, daß an dem Haltebolzen (3) stirnseitig ein Anschlagbund vorgesehen ist, der mit einer Stirnfläche (32) an einer vorzugsweise spanend bearbeiteten Stirnfläche (25) des Bolzenhalters (22) anschlägt.

9. Griffbefestigung nach einem der Ansprüche 1 bis 8, dadurch gekennzeichnet, daß an dem Haltebolzen (3) ein Rastelement (33) zum Verrasten des Griffstückes (1) an dem Tragsteg (22,3) vorgesehen ist.
